# EUROPEAN PATENT APPLICATION

(11) **EP 2 447 806 A1**
(43) Date of publication of application: **02.05.2012**
(21) Application number: 10172680.0
(22) Date of filing: 12.08.2010
(51) Int. Cl.: G06F 1/16, G06F 3/033, G06F 3/048, H04M 1/725, G06F 3/023

(54) **Method and electronic device with motion compensation**

(71) Applicant: Research In Motion Limited, Waterloo, ON N2L 3W8 (CA)
(72) Inventor: Deluca, Michael, Joseph, Rolling Meadows, IL 60008 (US)
(74) Representative: MERH-IP Matias Erny Reichl Hoffmann

(57) **Abstract**

A method and electronic device with motion compensation are described. In accordance with one embodiment, there is provided a method fiar operating an electronic device, comprising: detecting motion of the electronic device; deceiving ar3 input signal from an input device of the electronic device; selectively ignoring the input signal received from the input device in response to the detecting.

## Description

### TECHNICAL FIELD

The present disclosure relates to electronic devices, and in particular to a method and electronic device with motion compensation.

### BACKGROUND

Electronic devices are designed for use in a generally stable (e.g., stationary) environment. As a result, the operation of electronic devices may become difficult when the electronic device is not stationary, for example, when the electronic device is being carried by a device user who is walking, jogging or traveling in a motor vehicle. Body movements while walking or jogging and bumps in the road often make it difficult to accurately input data on the electronic device. If the eleetre3lie device moves relative to the user's finger because of a relatively unstable environment, the wrong key of a keyboard or the wrong soft key of a touch-sensitive display may be actuated in error. This erroneous input requires additional operations to undue the erroneous input and frustrates the device user. Accordingly, there is a need for methods and electronic devices for operating a electronic device in ar1 unstable (e.g., non-stationary) environment.

### BRIEF DESCRIPTION OF THE DRAWINGS

Figure 1 is a simplified block diagram of components including interval components of an electronic device suitable for carrying out example embodiments of the present disclosure;

Figure 2 is a front view of an electronic device having a full QWERTY keypad;

Figure 3 is a flowchart illustrating a method of operating an electronic device in an unstable (e.g., non-stationary) environment in accordance with one example embodiment of the present disclosure;

Figure 4A is a flowchart illustrating a method of selecting an alternate input in accordance with one example embodiment of the present disclosure;

Figure 4B is a flowchart illustrating a method of selecting an alternate input in accordance with another example embodiment of the present disclosure;

Figure 5 is a flowchart illustrating a method of operating an electronic device in an unstable (e.g., non-stationary) environment in accordance with a further example embodiment of the present disclosure; and

Figure 6 is a flowchart illustrating a method of operating an electronic device in an unstable (e.g., non-stationary) environment in accordance with a further example embodiment of the present disclosure.

### DETAILED DESCRIPTION OF EXAMPLE EMBODIMENTS

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The present disclosure describes provides a method and electronic device for operating the electronic device in an unstable (e.g., non-stationary) environment. Movement of the electronic device is detected, and the velocity and/or acceleration experienced by the electronic device are used to adapt the user interface of the electronic device to the environment for improved interaction.

In accordance with one embodiment of the present disclosure, there is provided a method for operating an electronic device, comprising: detecting motion of the electronic device; receiving an input signal from an input device of the electronic device; selectively ignoring the input signal received from the input device in response to the detecting.

In accordance with another embodiment of the present disclosure, there is provided a method for operating an electronic device, comprising: detecting motion of the electronic device; receiving input signals from a keyboard of the electronic device; selecting an alternate key in the keyboard of the electronic device in accordance with a magnitude and/or direction of the detected motion when motion above the threshold level is detected within a threshold duration of the input signal of the input device; generating an alternate input in accordance with the selected alternate key; and processing the alternate input.

In accordance with a further embodiment of the present disclosure, there is provided a method for operating an electronic device, comprising: detesting motion of the electronic device; receiving input signals from a touch-sensitive display of the electronic device, each input signal including data describing a touch location; determining an adjusted touch vocation in accordance with a magnitude and/or direction of the detected motion when motion above the threshold level is detected within a threshold duration of the input signal of the touch-sensitive display; determining an on screen item in accordance with the adjusted touch location; determining an input corresponding to the onscreen item; and professing the input corresponding to the onscreen item.

In accordance with a further embodiment of the present disclosure, there is provided a method for operating an electronic device, comprising: determining a velocity of the electronic device; and changing a duration of actuation for registering an input for an input device of the electronic device in response to the determining.

In accordance with further embodiment of the present disclosure, there is provided a method for operating an electronic device, comprising: determining a velocity of the electronic device; changing a distance of directional inputs detected by a navigation device of the electronic device in response to the determining.

The disclosure generally relates to an electronic device, which is a handheld electronic device in the embodiments described herein. Example of handheld electronic devices include mobile wireless communication devices such as pagers, cellular phoneys, cellular smart-phones, wireless organizers, personal digital assistant, tirelessly enabled notebook computers, and so forth. In some embodiments the electronic device may be a handhold electronic device without wireless communication capabilities, such as a handhold electronic game device, digital photograph album, digital camera, or other device.

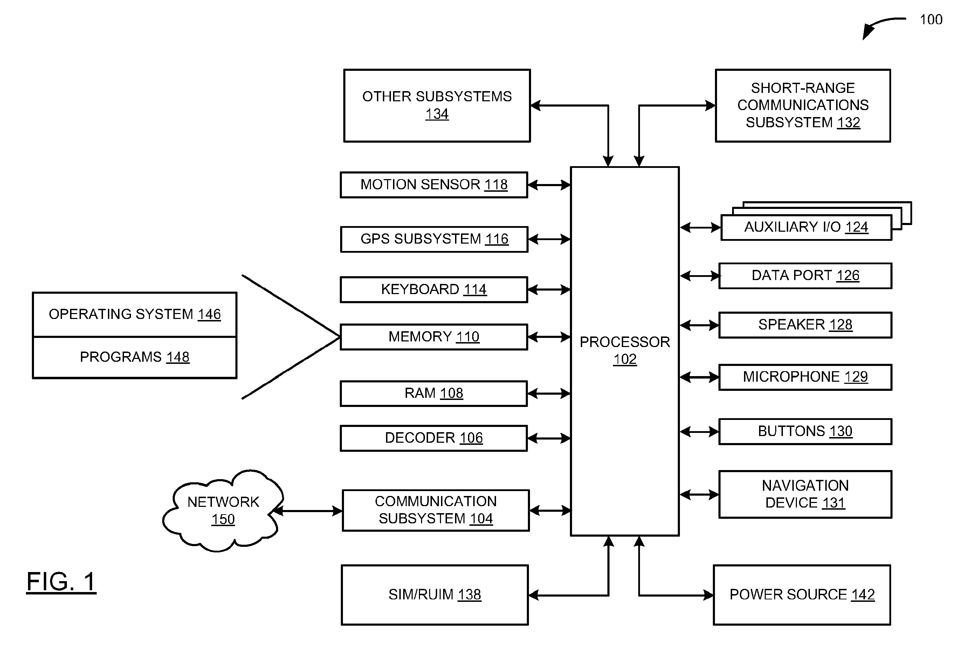

A block diagram of an example of an electronic device 100 is shown in Figure 1 . The electronic device 100 included multiple components, such as a processor 102 that controls the overall operation of the electronic device 100. Communication functions, including data and voice communications, are performed through a communication subsystem 104. Data received by the electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the electronic device 100.

The processor 102 interacts with other components, such as Random Access Memory (RAM) 108, memory 110, a display screen 112 (such as a liquid crystal display (LCD), a keyboard 114 comprising a plurality of keys 115, a GPS (Global Positioning System) subsystem 116 including a GPS receiver (not shown), one or more motion sensors 118, one or more auxiliary input/output (I/O) subsystems 124, a data port 126, a speaker 128, a microphone 129, one or more keys or buttons 130A, 1 30B, 130C and 130D, a navigation device 131, a short-range communications subsystem 132, and other device subsystems 134. The keyboard 114 may use any suitable switch construction including, but not limited to, a membrane keyboard, dome-switch keyboard, scissor-switch keyboard, capacitive keyboard, mechanical-switch keyboard, buckling- spring keyboard, Hall-effect keyboard, laser keyboard, roll-up keyboard, or transparent keyboard. A keypad may be provided instead of a keyboard in other embodiments.

In some embodiments, the display screen 112 may be provided with a touch-sensitive overlay (not shown) operably connected to an electronic controller (not shown) to form a touch-sensitive display. The touch-sensitive display may have any number of user-selectable features rendered thereof, for example, in the form of virtual buttons for user-selection of, for example, applications, options, or onscreen keys of an onscreen (or virtual) keyboard for user entry of data during operation of the electronic device 100.

The touch-sensitive display may be any suitable touch-sensitive display, such as a capacitive, resistive, infrared, surface acoustic wave (SAW) touch-sensitive display, strain gauge, optical imagine, dispersive signal technology, acoustic pulse recognition, and so forth, as known in the art. A capacitive touch-sensitive display includes a capacitive touch-sensitive overlay. The overlay may be an assembly of multiple layers in a stack including, for example, a substrate, a ground shield layer, a barrier layer, one or more capacitive touch sensor layers separated by a substrate or other barrier, and a cover. The capacitive touch censor layers may be any suitable material, such as patterned indium tin oxide (ITO).

One or more touches, also known as touch contacts or touch events, may be detected by the touch-sensitive display. The processor 102 may determine attributes of the touch, including a vocation of a touch. Touch location data may include an area of contact or a single point of contact, such as a point at or near a centre of the area of contact. The location of a detected touch may include x and y components, e.g., horizontal and vertical components, respectively, with respect to one's view of the touch-sensitive display. For example, the x vocation component may be determined by a signal generated from one touch sensor, and the y location component may be determined by a signal generated from another touch sensor. A signal is provided to the controller in response to detection of a touch. A touch may be detected from any suitable object, such as a finger, thumb, appendage, or other items, for example, a stylus, pen, or other pointer, depending on the nature of the touch-sensitive display. Multiple simultaneous touches may be detected. The centre of the area of contact of each touch is commonly referred to as the touch point or centroid. It will be appreciated that during a touch event the touch point moves as the object detected by the touch-sensitive display moves.

User-interaction with a graphical user interface (GUI) is performed through the keyboard 114 and/or touch-sensitive display. The processor 1 02 interacts with the touch-sensitive display via its electronic controller. Information, such as text, characters, symbols, images, icons, and other items that may be displayed or rendered on an electronic device, is displayed on the display screen 112 via the processor 102.

The motion sensors 118 include an accelerometer which detects changes in the acceleration of the electronic device 100 or other motion sensor. The motion sensors 118 may also comprise a proximity sensor, gyroscope, or both, which detect changes in the proximity and orientation of electronic device 100. The changes in acceleration, proximity and/or orientation detected by the accelerometer, proximity sensor, gyroscope, or combination thereof is be ir7terpreted by the electronic device 1 00 as motion of the electronic device 1 00. When the changes in acceleration, proximity and/or orientation are within threshold tolerance(s) of regularity or predictability, or when the changes in acceleration, proximity and/or orientation match predetermined criteria (e.g., stored in the memory 110), the chari^{g}es are interpreted by the electrornic device 100 as a pattern of motion. Multiple patterns of motion may be recognized by the electronic device 100.

The GPS subsystem 116 is integrated in the electronic device 100, or in other example embodiments, provided as a separate device (which, for example, may be connected to the electronic device 100 through an interface such as the data port 126) so as to provide access to location-based services. The GPS subsystem 116 may be supplemented or replaced with other vocation or positioning systems, such as triangulation via base stations in a cellular network.

The buttons 130A, 130B, 130C and 130D, are located below the display screen 112 and above the keypad 118 on a front face of the electronic device 100. The buttons 130A, 130B, 130C and 130D generate corresponding input signals when activated. The buttons 130A, 130B, 130C and 130D may be constructed using any suitable button (or key) construction such as, for example, a dome-switch construction. The actions performed by the device 100 in response to activation of respective buttons 130A, 130B, 130C and 1 30D are context-sensitive. The action performed depends on a context that the button was activated. The context may be, but is not limited to, a device state, application, screen context, selected item or function, or any combination thereof.

The buttons 130A, 130B, 130C and 130D, in the shown embodiment, are an answer (or send) button 130A, menu button 130B, escape (or back) button 130C, and a hang up (or end) button 130D. The send/answer button 130A may be used for answering an incoming voice call, invoking a menu for a phone application when there is no voice call in progress, or initiating an outbound voice phone call from the phone application when a phone number is selected in the phone application. The menu button 130B may be used to invoke a context-sensitive menu comprising context-sensitive menu options. The escape/ back button 130C may be used to cancel a current action, reverses (e.g., "back up" or "go back") through previous user interface screens or menus displayed on the display screen 112, or exit the current application 148. The end/hang up button 130D may be used to end a voice call in progress or hide the current application 148.

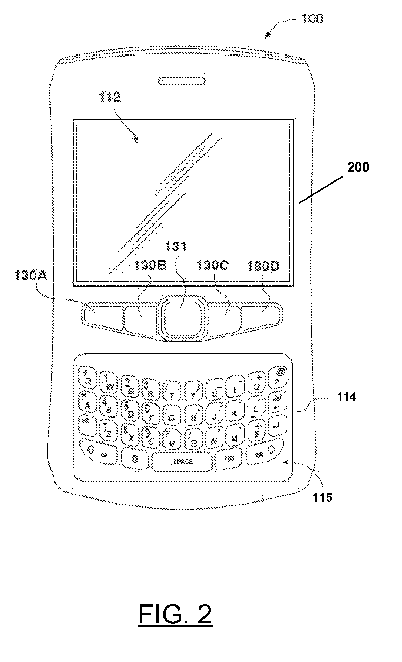

The navigation device 131 may be a depressible (or clickable) joystick such as a depressible optical joystick, a depressible trackball, a depressible scroll wheel, or a depressible touch-sensitive trackpad or touchpad. Figure 2 shows the navigation device 131 in the form of a depressible optical joystick. The navigation device 131 detects directional inputs. The directional inputs may be caused by movements of the user's finger which are detected by the navigation device 131, or rotational movements of the navigation device 131 caused by the user's finger depending on the type of navigation device 131 .

When the navigation device 131 is a depressible optical joystick, movements of the user's finger, such as vertical and horizontal movements, are detected by an optical sensor of the optical joystick. Up, down, left or right movements detected by the optical joystick are interpreted as corresponding up, down, left or right navigation inputs/commands which are performed by the processor 102. The content displayed on the display screen 112 and/or an on screen position indicator (commonly referred to as a caret, cursor or focus) is moved from an initial location focusing one onscreen item to a new location focusing a different onscreen item. Typically, navigation is performed using 1 :1 movement so that each direction gesture or movement detected by the navigation device 131 causes a corresponding navigation movement.

To identifiy a subscriber for network access, the electronic device 100 uses a Subscriber Identity Module or a Removable User Identity Module (SIM/RUIM) card 138 for communication with a network, such as the wireless network 150. Alternatively, user identification information may be programmed into memory 110.

The electronic device 1 00 includes an operating system 146 and software applications or programs 148 that are executed by the processor 102 and are typically stored in a persistent, updatable store such as the memory 110. Additional applications or programs 148 may be loaded onto the electronic device 100 through the wireless network 150, the auxiliary I/O subsystem 124, the data port 126, the short-range communications subsystem 132 or any other suitable subsystem 134.

A received signal such as a text message, an e-mail message, or web page download is processed by the communication subsystem 104 and input to the processor 102. The processor 102 processes the received signal for output to the display screen 112 and/or to the auxiliary I/O subsystem 124. A subscriber may generate data items, for example e-mail messages, which may be transmitted over the wireless network 150 through the communication subsystem 104. For voice communications, the overall operation of the electronic device 100 is similar. The speaker 128 outputs audible information converted from electrical signals, and the microphone 129 converts audible information into electrical signals for processing.

Referring to Figure 2, a front view of an electronic device 100 is shown. Each key 115 of the keyboard 114 may be associated with one or more indicia representing an alphabetic character, a numeral or a command (such as a space command, return command, or the like). The plurality of the keys 115 having alphabetic characters may be arranged in a standard keyboard layout such as a full QWERTY layout as shown in Figure 2, a reduced QWERTY layout, a QZERTY layout, a QWERTZ layout, an AZERTY layout, a Dvorak layout, a Russian keyboard layout, a Chinese keyboard layout, or other suitable layout. These standard layouts are provided by way of example and other similar standard layouts may be used. The keyboard layout may be based on the geographical region in which the electronic device 100 is intended for use.

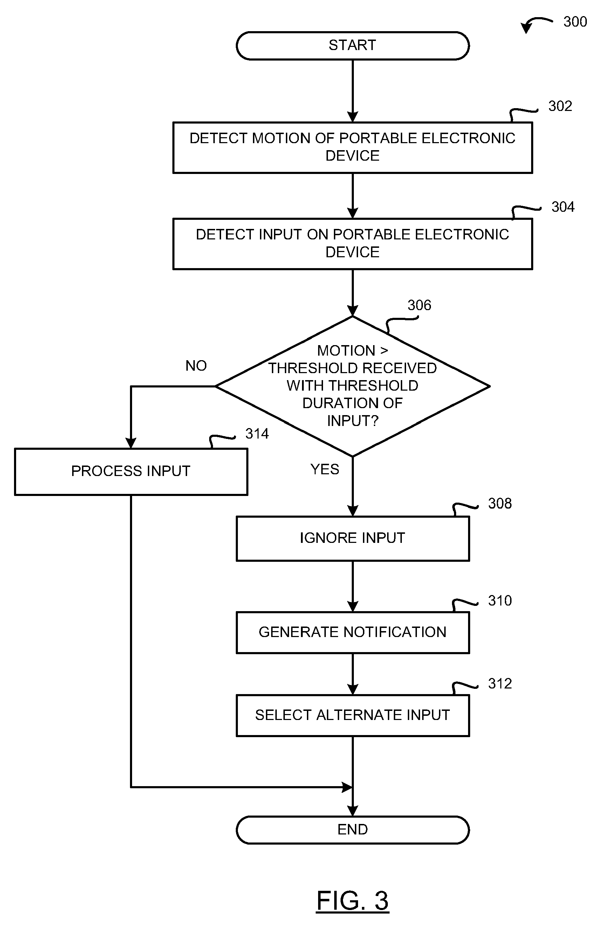

A flowchart illustrating one example embodiment of a method 300 of operating an electronic device 100 in an unstable (e.g., non-stationary) environment is shown in Figure 3. The method 300 may be carried out by software executed, for example, by the processor 102. Coding of software for carrying out such a method 300 is within the scope of a person of ordinary skill in the art given the present disclosure.

The electronic device 100 detects motion of the electronic device 100. In the presently described example embodiment, motion is detected using the motion sensor(s) 118, but may be detected using the GPS subsystem 116 or other location-based service, or a combination of the motion sensor(s) 118 and the GPS subsystem 116 or other location-based service (302) in other example embodiments. The magnitude and/or direction of the motion may be determined by the electronic device 100. In some examples, an accelerometer of the motion sensor(s) 118 is used to detect motion of the electronic device 100 using acceleration measurements. The electronic device 100 monitors acceleration measurements reported by the accelerometer and detects motion when acceleration matches predetermined criteria, for example, when acceleration exceeds a threshold acceleration magnitude.

The electronic device 1 00 receives input signals from the input devices of the electronic device 100 (304) including, but not limited to, the keyboard 114 and/or the touch-sensitive display. Typically, each key in the keyboard 114 generates a distinct input signal in response to actuation/depression of the respective key. The input signals are recognized and interpreted by the processor 102. Each input signal is associated with one or more distinct inputs, such as an alphabetic character. When multiple inputs are associated with a key, the processor 102 disambiguates a particular input from the multiple inputs associated with the key in accordance with a secondary indication such as actuation/depression of a control key (e.g., the ALT key) or a duration of the key actuation/depression.

The touch-sensitive display typically generates input signals in response to a touch event. The input signals include data describing a touch location of the touch event. The touch location is the centroid of the area of contact of each touch event. The electronic device 100, for example the processor 102 under the instruction of the operating system 146, determines an onscreen item associated with the touch location, if any. The onscreen item is provided by a displayed user interface screen of the GUI of the electronic device 100. The onscreen item may be a button, an icon, a soft key ("virtual key") in an onscreen ("virtual") keyboard or other selectable onscreen item. A number of onscreen items may be displayed on the touch-sensitive display at any time. The processor 102 determines the onscreen item associated with the input signal received from the touch-sensitive display and the input associated with the onscreen items.

The electronic device 100 selectively ignores the input signal received from the input device in response to the detecting. In the shown example, the electronic device 100 determines whether motion above a threshold level is detected within a threshold duration of the input signal of the input device (306), which may be the keyboard 114 or touch-sensitive display. The threshold level is set to a value at which the motion is deemed likely to cause erroneous input. The threshold duration is used to compensate for differences in the time required for the input device and the GPS subsystem 116 and/or the motion sensor(s) 118 to report to the processor 102. For example, the accelerometer may report acceleration data to the processor 102 before, during or after input is received from the input device. The threshold duration is set to a value which takes into account any delay between the input device and the GPS subsystem 116 and/or the motion sensor(s) 118 reporting to the processor 102. The threshold duration may be set to 0 when there is no delay. The threshold level and threshold duration may be fixed during manufacturing of the electronic device 100, or may be configurable or learned parameters which more accurately detect motions which are likely to cause erroneous inputs.

When motion above the threshold level is detected within the threshold duration of the input signal of the input device, the input signal received from the input device is ignored or rejected/discarded by the processor 102 (308). This occurs at the user interface and/or operating system level, thereby avoiding any unnecessary processing by the active application 148 of the electronic device 100 and without user action.

Optionally, a notification or alert may be generated via a notification element in response to ignoring an input signal (310). The notification provides the device user with a notification that the input has been ignored. The notification element is an output device which may be configured for generating a visual indication, audio indication, physical indication, or any combination thereof. The notification element may comprise one or more light emitting diodes (LEDs) or other light source for generating a visual indication, an icon or other GUI notification element, the speaker 128 or tone generator (not shown) for generating an audio indication, or a vibrator (not shown) or buzzer (not shown) for generating a physical indication. More than one type of notification element may be provided and activated during the generation of the notification.

Optionally, the electronic device 100 may attempt to compensate for motion by selecting at least one alternate input (312). The electronic device 100 uses the magnitude and/or direction of the detected motion to approximate the amount and/or direction of the movement of the electronic device 100, and select at least one alternate input based on the amount and/or direction of the movement of the electronic device 100. The alternate input is a prediction of the input that the device user intended. The alternate input may be an alternate key in the keyboard 114, or an alternate onscreen item displayed on the tough-sensitive display depending on the input device of the electronic device 100 used. When the input device is the input device, selecting an alternate input comprises determining an adjusted touch location in accordance with a magnitude and/or direction of the detected motion when motion above the threshold level is detected within a threshold duration of the input signal of the touch-sensitive display. The onscreen item associated with the adjusted touch location is then determined, and the input corresponding to the onscreen item is determined.

When the motion below the threshold level is detected within the threshold duration of the input signal of the input device, the input signal received from the input device is processed in the usual way (314). Similarly, when motion above the threshold level is detected, but it is outside of the threshold duration of the input signal of the input device, the input signal received from the input device is processed in the usual way (314). Processing may comprise outputting a result of the input to the display screen 112 (e.g., such as displaying a character associated with a key), performing a command or function associated with the input, among other things.

When an input is received at substantially the same time that motion exceeding a threshold magnitude is detected, the input is likely erroneous because the electronic device 100 has moved. The above described embodiment provides a solution for handling erroneous inputs which obviates the need for device users to actively undo erroneous inputs.

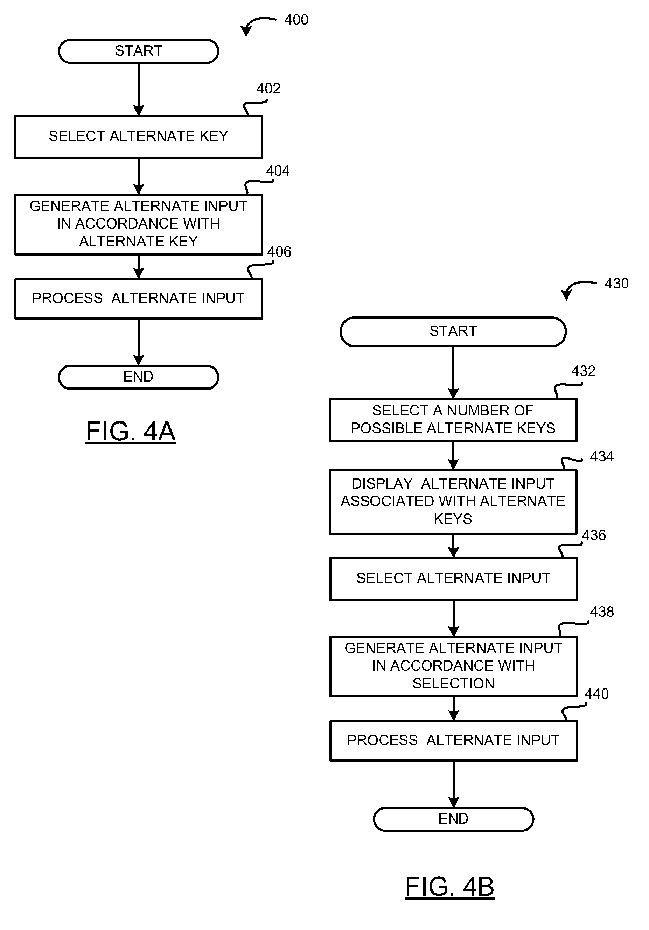

Referring now to Figure 4A, one example embodiment of a method 400 of selecting an alternate input will be described. The method 400 may be carried out by software executed, for example, by the processor 102. Coding of software for carrying out such a method 400 is within the scope of a person of ordinary skill in the art given the present disclosure.

In the method 400, the input device is a keyboard 114 of the electronic device 100 or the touch-sensitive display with an onscreen keyboard provided thereon. An alternate key in the keyboard 114 or onscreen keyboard is selected by the electronic device 100, for example by the processor 102, in accordance with a magnitude and/or direction of the detected motion when motion above the threshold level is detected within a threshold duration of the input signal of the input device (402). The magnitude of the motion may be used to approximate the amount/distance of the movement of the electronic device 100, or a range thereof. The direction of the motion may be used to approximate the direction of the movement of the electronic device 100, or a range thereof. The amount/distance of the movement and/or the direction of the movement are used to select the alternate key in the keyboard 114 or onscreen keyboard.

As noted above, motion is typically detected using the motion sensor(s) 118, for example, using an accelerometer of the motion sensor(s) 118 to detect motion of the electronic device 100 using acceleration measurements. The acceleration measurements may be used to determine characteristics of the detected motion including a magnitude and/or direction of the detected motion. In n some embodiments, the method 400 may only be performed when the characteristics of the detected motion allow the magnitude and/or direction of the detected motion to be determined within a threshold tolerance. In yet other embodiments, the method 400 may only be performed when the characteristics of the detected motion indicate that the detected motion is substantially horizontal (e.g., side-to-side or lateral movement) or substantially vertical (e.g., up-and-down movement).

An alternate input is generated by the electronic device 100, for example by the processor 102, in accordance with the alternate key in response to its selection (404). The electronic device 100 then processes the alternate input (406). Processing the alternate input may comprise outputting a result of the input to the display screen 112 (e.g., such as displaying a character associated with a key), performing a command or function associated with the alternate key, among other things.

Referring now to Figure 4B, another example embodiment of a method 430 of selecting an alternate input will be described. The method 430 may be carried out by software executed, for example, by the processor 102. Coding of software for carrying out such a method 430 is within the scope of a person of ordinary skill in the art given the present disclosure.

In the method 430, the input device is the keyboard 114 or the touch-sensitive display with an onscreen keyboard provided thereon. A number of possible alternate keys are determined by the electronic device 100, for example by the processor 102, in accordance with a magnitude and/or direction of the detected motion when motion above the threshold level is detected within a threshold duration of the input signal of the input device (432). Each of the number of possible alternate keys matches the amount/distance of the movement and/or the direction of the movement.

The alternate inputs associated with the number of possible alternate keys is displayed on the display screen 112 in a user interface for selecting one of the possible keys (434) . A particular one of the possible alternate inputs may be selected using corresponding selection input (436). The selection input may comprise highlighting the alternate input in the user interface via navigation input with the navigation device 131 and the actuation/depression the navigation device 131 or an < ENTER> key of the keyboard 114, actuation/depression a num ber key of the keyboard 114 corresponding to a number associated with the particular alternate input, or other suitable input.

The alternate input is then generated by the electronic device 100, for example by the processor 102 in response to the selection input (438). The electronic device 100 then processes the alternate input (440). Processing the alternate input may comprise outputting a result of the input to the display screen 112 (e.g., such as displaying a character associated with a key), performing a command or function associated with the alternate input, among other things.

The number of possible alternate inputs may, in some embodiments, be determined using a text disambiguation function such as those used in predictive text and spelling check functions. This may assist in more accurately suggest the possible alternate inputs when in text entry mode and/or limit the possible alternate inputs. The text disambiguation function may operate in a similar fashion to that described in following U.S. Patents commonly owned by the owner of the present application: U.S. Patent No. 7,644,209 directed to a "Handheld electronic device with text disambiguation allowing dynamic expansion of input key associations", and U.S. Patent No. 7,477,238, U.S. Patent No. 7,475,004, U.S. Patent No. 7,389,124, U.S. Patent No. 7,358,866, U.S. Patent No. 7,352,296, U.S. Patent No. 7,333,085, U.S. Patent No. 7,324,083, U.S. Patent No. 7,312,726, U.S. Patent No. 7,289,044, U.S. Patent No. 7,283,065 and U.S. Patent No. 7,091,885 each directed to a "Handheld electronic device with text disambiguation". The content of each of these U.S. Patents is incorporated herein by reference. The methods taught in the above-mentioned patents may be adapted for use with the teachings of the present disclosure by modifying the logical steps associated with having many characters to one key in the above-mentioned patents to accommodate the many characters to one stroke sequence mentioned above.

The methods 400 or 430 may be used to select at least one alternate input (312) in the method 300 described above. Moreover, the methods 400 and 430 may also be applied to arrangements of onscreen items on the tough-sensitive display other than an onscreen keyboard such as, for example, an icon menu.

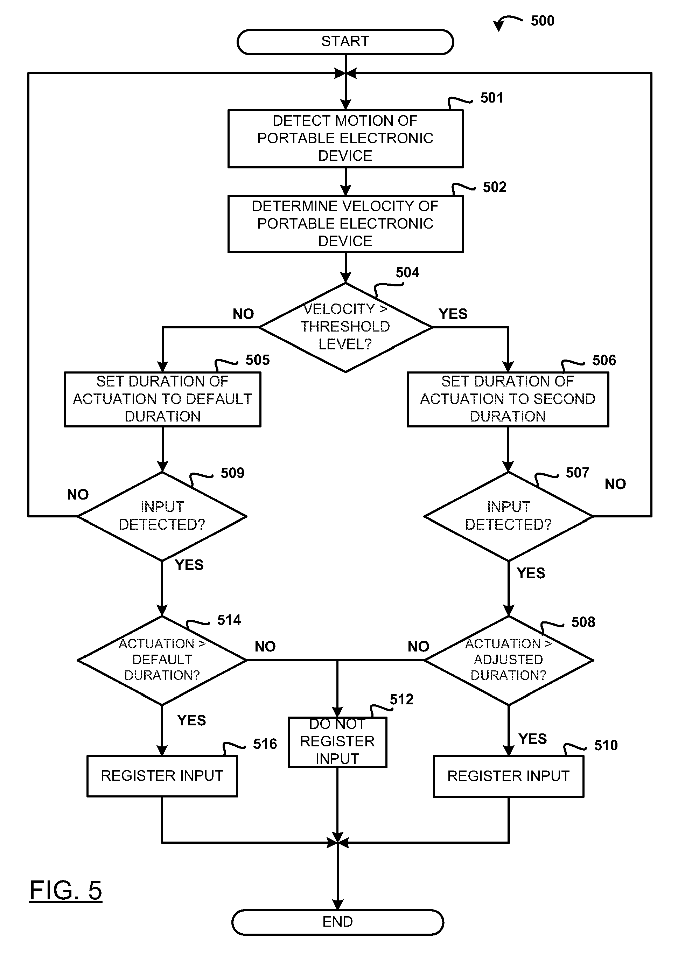

A flowchart illustrating a further example embodiment of a method 500 of operating an electronic device 100 in an unstable (e.g., non-stationary) environment is shown in Figure 5. The method 500 may be carried out by software executed, for example, by the processor 102. Coding of software for carrying out such a method 500 is within the scope of a person of ordinary skill in the art given the present disclosure.

The electronic device 100 monitors for and detects motion of the electronic device 1 00 (501). Motion is typically detected using the GPS subsystem 116 or other location-based service. When the electronic device 100 is in motion, the electronic device 100 determines the velocity of the electronic device 100 (502). Velocity is typically determined using the GPS subsystem 116 or other location-based service.

When the determined velocity exceeds a threshold level (block 504), a duration of actuation for registering an input for an input device is changed in response to the determining. In the shown example, the duration of actuation for registering an input for an input device is set to a second duration longer than a default duration (506). When the determined velocity does not exceed the threshold level (block 504), the duration of actuation for registering an input for an input device is set to the default duration (505). Detection of a velocity which exceeds the threshold level indicates that the electronic device 100 is moving at a velocity which is likely to cause erroneous inputs, for example, when the electronic device 100 is in a motor vehicle or other vehicle moving at a high velocity. When the electronic device 100 is in a motor vehicle or other vehicle moving at a high velocity, user distractions and minor accelerations are likely to cause erroneous inputs.

The threshold level acts as a threshold velocity above which motion compensation is initiated and below which motion compensation is terminated. The default duration may be 0 in some embodiments. The value of the second duration may vary with the determined velocity. For example, the second duration may be proportional to the determined velocity.

The input device may be the keyboard 114 of the electronic device 100 in which case the duration of actuation is the duration of actuation/depression of a key in the keyboard 114 (i.e., duration of a key press) before the processor 102 registers an input event for the respective key. Alternatively, the input device may be a button and the duration of actuation may be the duration of actuation/depression of a button before the processor 1 C32 registers ar7 input event for the button. In other words, longer key presses are used by the processor 102 for registering an input event for the respective key or button.

In one example, the duration of actuation for registering an input for a key or button may be approximately 10 millisecond (ms) when the determined velocity of the electronic device 1 00 is approximately 0 miles per hour (mph). In other words, the key/button input is registered ir7 response to actuation of the key/button. When the velocity is 50 mph, the duration of actuation for registering an input for a key or button may be approximately 100 ms. In other words, the key/button input is registered after the key/button has been actuated continually for 100 ms.

Alternatively, the input device may be the touch-sensitive display of the electronic device 110 in which case the duration of actuation is the duration of a touch elter3t at a location on the touch-sensitive display coincident with a selectable on screen item on the display screen 112. A location is coincident with the selectable on screen item in that the centroid of the touch event is within an input area of a user interface screen assigned for receiving input for activating the selectable onscreen item. The input area of the selectable on screen item may be different than the displayed area of the selectable onscreen item on the display screen 112 in some embodiments, typically the input area being larger than the displayed area in such embodiments to accommodate touch offset of the user.

In one example, the duration of the touch event for registering a touch input on the touch-sensitive display may be 10 ms when the velocity is 0 mph. When the velocity is 50 mph, the duration of the touch event for registering a touch input er7 the touch-sensitive display may be 10Q ms.

When the eleetre3lie device 100 is in motion and travelling at a velocity which exceeds the threshold velocity, the duration of actuation is set to the second duration (506). When the electronic device 100 receives an input from an input device (block 507), such as a key i3a the keyboard 114, button or the touch-sensitive display, it determines whether the duration of actuation exceeds the second duration (block 508). When the duration exceeds the second duration, an input is registered by the processor 102 (510). The input registered by the processor 102 is an input of the key, button input or touch input of the touch-sensitive display. When the duration does not exceed the second duration, no input is registered (512). When no actuation occurs, the electronic device 100 continues to monitor for and detect motion of the electronic device 1 QQ (501).

When the electronic device 10Q is not graveling at a velocity which exceeds the threshold velocity, the duration of actuation is set to the default duration (505). When the electronic device 100 receives an input from an input device (block 509), such as a key in the keyboard 114, button or the touch-sensitive display, it determines whether the duration of actuation exceeds the default duration (block 514). When the duration exceeds the default duration, ain input is registered by the processor 102 (516). The input registered by the processor 102 is an input of the key, button input or touch input of the touch-sensitive display. When the duration does not exceed the default duration, no input is registered (51 2). When no actuation occurs, the electronic device or continues to monitor for and detect motion of the electronic device 100 (501).

The method 500 is repeated until terminated, for example, by a change ir7 the operational mode of the electronic device 10Q, by a change in the active application 148, or by input received by the electronic device 100.

The method 500 may be combined with the method 300 and possibly 400 and/or 430 described above. Combining the methods may further increase input accuracy. In addition, the threshold level at which the inputs are ignored/rejected ir3 the methods method 300 and possibly 400 and/or 430 may be ir7areesed because input registration is compensated for velocity and so should result i3a a lower rejeatia3a/errar rate. Furthermore, the actuation parameter compensation which occurs in operations 501 to 506 of the method 500 may be implemented as an independent method separate from the input detention registration operations 507 to 516 of the method 500 in other embodiments.

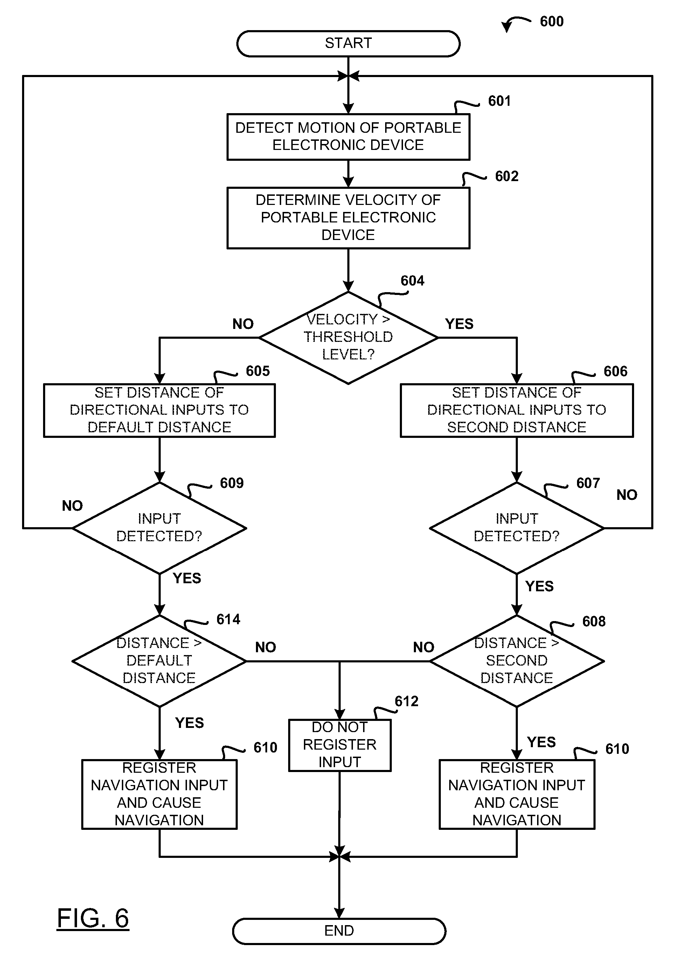

A flowchart illustrating yet a further example embodiment of a method 600 of operating an electronic device 100 in an unstable (e.g., non-stationary) environment is shown IBl Figure 6. The method 600 may be carried out by software executed, for example, by the processor 102. Coding of software for carrying out such a method 600 is within the scope of a person of ordinary skill in the art given the present disclosure.

The electronic device 100 monitors for and detects motion of the electronic device 100 (601). Motion is typically detected using the GPS subsystem 11 6 or other location-based service. When the electronic device 100 is Ill motion, the electronic device 100 determines the velocity of the electronic device 100 (602). Velocity is typically determined using the GPS subsystem 116 or other location-based service.

When the determined velocity exceeds a threshold level (block 604), a distance of the directional inputs detected by the navigation device 131 for registering a navigation input is set to a second distance longer than a default distance (606). When the determined velocity does not exceed the threshold level (block 504), the distance of the directional inputs detected by the navigation device 131 for registering a navigation input is set to the default distance (605). Detection of a velocity which exceeds the threshold level indicates that the electronic device 1 00 is moving at a velocity which is likely to cause erroneous inputs, for example, when the electronic device 100 is in a motor vehicle or other vehicle moving at a high velocity. When the electronic device 100 is in a motor vehicle or other vehicle moving at a high velocity, user distractions and minor accelerations are likely to cause erroneous inputs.

The threshold level acts as a threshold velocity above which motion compensation is initiated and below which motion compensation is terrY311lated. As noted above, the directional inputs may be caused by movements of the user's finger which are detected by the navigation device 131, or rotational movements of the navigation device 131 caused by the user's finger depending on the type of navigation device 131. This effectively slows the navigation (e.g., scrolling) speed of the navigation device 131. The value of the second distance may vary with the determined velocity, for example, the second distance may be proportional to the determined velocity.

When the electronic device 100 is in motion and ravelling at a velocity which exceeds the threshold velocity, the distance of the directional inputs detected by the navigation device 131 for registering a navigation input is set to the second distance (606). When a directional input is detected by the navigation device 131 (block 607), the electronic device 100 determines whether the distance exceeds the second distance (block 608). When the distance exceeds the second distance, a corresponding navigation input is registered and the electronic device 100 causes corresponding navigation movement to be performed in the user interface displayed on the display screen 1 12 (610). When directional input does not exceed the second distance, no navigation input is registered (612). When no actuation occurs, the electronic device 100 continues to monitor for and detect motion of the electronic device 100 (601).

When the electronic device 100 is not travelling at a velocity which exceeds the threshold velocity, the duration of actuation is set to the default distance (605). When a directional input is detected by the navigation device 131 (block 609), the electronic device 100 determines whether the distance exceeds the default distance (block 614). When the distance exceeds the default distance, a corresponding navigation input is registered and the electronic device 100 causes corresponding navigation movement to be performed in the user interface displayed on the display screen 112 (616). When directional input does not exceed the default distance, no navigation input is registered (612). When no actuation occurs, the electronic device 100 continues to monitor for and detect motion of the electronic device 100 (601).

The method 600 is repeated until terminated, for example, by a change in the operational mode of the electronic device 100, by a change in the active application 148, or by input received by the electronic device 100.

The method 600 may be combined with the method 300 and possibly 400, 430 and/or 500 described above. Combining the methods may further increase input accuracy. In addition, the threshold level at which the inputs are ignored/rejected in the methods method 300 and possibly 400 and/or 430 may be increased because input registration is compensated for velocity and so should result in a lower rejection/error rate. Furthermore, the actuation parameter compensation which occurs in operations 601 to 606 of the method 600 may be implemented as an independent method separate from the input detection registration operations 607 to 616 of the method 600 in other embodiments.

The methods 300, 400, 430, 500 and/or 600 may contain additional or fewer processes than shown and/or described, and may be performed in a different order. Computer-readable code executable by at least one processor 102 of the electronic device 1 00 to perform the methods 300, 400, 430, 500 and/or 600 may be stored in a computer- readable medium such as the memory 1fl. The methods described above may, in various embodiments, be performed independently of each other, or in some embodiments may be combined and either performed in parallel with each other or sequentially with each other.

While the present disclosure is described primarily in terms of methods, the present disclosure is also directed to an electronic device configured to perform at least part of the methods. The electronic device may be configured using hardware modules, software modules, a combination of hardware and software modules, or any other suitable manner. The present disclosure is also directed to a pre-recorded storage device or computer- readable medium having computer-readable code stored thereof, the computer-readable code bering executable by at least one processor of the electronic device for performing at least parts of the described methods.

The present disclosure may be embodied in other specific forms s without departing from its spirit or essential characteristics. The described embodiments are to be considered in all respects as being only illustrative and net restrictive. The present disclosure intends to cover and embrace all suitable changes in technology. The scope of the present disclosure is, therefore, described by the appended claims rather than by the foregoing description. All changes that come within the meaning and range of equivalency of the claims are ir7ter7ded to be embraced within their scope.

## Claims

1. A method for operating an electronic device, comprising:
detecting motion of the electronic device;
receiving an input signal from a3a input device of the electronic device;
selectively ignoring the input signal received from the input device in response to the detecting.

2. The method of claim 1, wherein the selectively ignoring the input signal ignores the input signal when motion above a threshold level is detected within a threshold duration of the input signal of the input device.

3. The method of claim 1 or claim 2, further comprising:
generating a notification in response to ignoring the input signal.

4. The method of any one of claims 1 to 3, further comprising:
processing an input signal received from the input device when motion below the threshold level is detected within the threshold duration of the input signal of the input device.

5. The method of any one of claims 1 to 4, further comprising:
processing an input signal received from the input device when motion above the threshold level is detected outside of the threshold duration of the input signal of the input device.

6. The method of any one of claims 1 to 5, further comprising:
selecting an alternate input in accordance with a magnitude and/or direction of the detected motion when motion above the threshold level is detected within a threshold duration of the input signal of the input device; and
processing the alternate input.

7. The method of claim 6, wherein the selecting comprises:
selecting a number of possible alternate inputs in accordance with a magnitude and/or direction of the detected motion when motion above the threshold level is detected within a threshold duration of the input signal of the input device;
displaying the number of possible alterr3ate inputs on a display screen of the electronic device;
receiving selecting input selecting a particular one of the number of possible alternate inputs.

8. The method of any one of claims 1 to 7, wherein the input device is a key in a keyboard of the portable electronic device, the method further comprising:
selecting an alternate key in the keyboard of the electronic device in accordance with a magnitude and/or direction of the detected motion when motion above the threshold level is detected within a threshold duration of the input signal of the input device;
generating an alternate input in accordance with the selected alternate key; and
processing the alternate input.

9. The method of any one of claims 1 to 7, wherein the input device is a touch-sensitive display, the input signals received from the touch-sensitive display including data describing a touch location, the method further comprising:
determining an adjusted touch location in accordance with a magnitude ar3d; ar direction of the detected motion when motion above the threshold level is detected within a threshold duration of the input signal of the tough-sensitive display;
determining an on screen item in accordance with the adjusted touch location;
determining an input corresponding to the on screen item; and
processing the input corresponding to the onscreen item.

10. The method of claim 9, wherein the on screen item is a virtual key in a virtual keyboard provided on the touch-sensitive display.

11. An electronic device comprising:
an input device;
a processor connected to the input device and configured for performing the method of any one of claims 1 to 1 ge

## Amended claims

### Amended claims in accordance with Rule 137(2) EPC.

**1.** A method for operating an electronic device, comprising:
detecting motion of the electronic device;
receiving an input signal from an input device of the electronic device;
selectively ignoring the input signal received from the input device in response to the detecting;
selecting an alternate input In accordance with a magnitude and/or direction of the detected motion when motion above the threshold level is detected within a threshold duration of the input signal of the input device; and
processing the alternate Input.

**2.** The method of claim 1, wherein the selectively ignoring the input signal ignores the input signal when motion above a threshold level is detected within a threshold duration of the input signal of the input device.

**3.** The method of claim 1 or claim 2, further comprising:
generating a notification in response to ignoring the input signal.

**4.** The method of any one of claims 1 to 3, further comprising:
processing an input signal received from the input device when motion below the threshold level is detected within the threshold duration of the input signal of the input device.

**5.** The method of any one of claims 1 to 4, further comprising:
processing an input signal received from the input device when motion above the threshold level is detected outside of the threshold duration of the input signal of the input device.

**6.** The method of any one of claims 1 to 5, wherein the selecting comprises:
selecting a number of possible alternate inputs in accordance with a magnitude and/or direction of the detected motion when motion above the threshold level is detected within a threshold duration of the input signal of the input device;
displaying the number of possible alternate inputs on a display screen of the electronic device;
receiving selecting input selecting a particular one of the number of possible alternate inputs.

**7.** The method of any one of claims 1 to 6, wherein the input device is a key in a keyboard of the portable electronic device, the method further comprising:
selecting an alternate key in the keyboard of the electronic device in accordance with a magnitude and/or direction of the detected motion when motion above the threshold level is detected within a threshold duration of the input signal of the input device;
generating an alternate input in accordance with the selected alternate key; and
processing the alternate input.

**8.** The method of any one of claims 1 to 6, wherein the input device is a touch-sensitive display, the input signals received from the touch-sensitive display including data describing a touch location, the method further comprising:
determining an adjusted touch location in accordance with a magnitude and/or direction of the detected motion when motion above the threshold level is detected within a threshold duration of the input signal of the touch-sensitive display;
determining an onscreen item in accordance with the adjusted touch location;
determining an input corresponding to the onscreen Item; and
processing the input corresponding to the onscreen item.

**9.** The method of claim 8, wherein the onscreen item is a virtual key in a virtual keyboard provided on the touch-sensitive display.

**10.** An electronic device comprising:
an input device;
a processor connected to the input device and configured for performing the method of any one of claims 1 to 9.
